# EUROPÄISCHE PATENTANMELDUNG

(11) **EP 0 576 108 A2**
(43) Veröffentlichungstag der Anmeldung: **29.12.1993**
(21) Anmeldenummer: 93250159.6
(22) Anmeldetag: 08.06.1993
(51) Int. Cl.: H02P 7/67, H02P 7/74, H02K 16/00

(54) **Antriebskonzept für elektromotorische Drehantriebe**

(30) Priorität: 25.06.1992 DE 4220968
(71) Anmelder: MANNESMANN Aktiengesellschaft, D-40027 Düsseldorf (DE)
(72) Erfinder: Stachuletz, Manfred, D-4000 Düsseldorf (DE)
(74) Vertreter: Meissner, Peter E., Dipl.-Ing.

(57) **Zusammenfassung**

Die Erfindung betrifft ein Antriebskonzept für elektromotorische Drehantriebe mit stark schwankendem Leistungsbedarf in Bandanlagen, vorzugsweise an Haspelantrieben und/oder Bandzugmeßrollen. Der Erfindung liegt die Aufgabe zugrunde, den Drehantrieb so auszulegen, daß auch stark unterschiedlichem Leistungsbedarf eine stabile und sehr genaue Regelung der Antriebsmotoren möglich wird. Dies wird dadurch erreicht, daß der Drehantrieb aus zwei in Tandemanordnung vorgesehene Elektromotoren (1 und 2) besteht, die spielfrei und unabhängig voneinander schaltbar miteinander gekuppelt sind und einzeln oder gemeinsam motorisch und/oder generatorisch antreibbar sind.

## Beschreibung

Die Erfindung betrifft ein Antriebskonzept für elektromotorische Drehantriebe mit stark schwankendem Leistungsbedarf in Bandanlagen, vorzugsweise an Haspelantrieben und/oder Bandzugmeßrollen.

Bandhaspel arbeiten, beispielsweise als Kaltbandhaspel mit spreizbaren Wickeldornen in Kaltwalzwerken und Bandanlagen. Nach einigen wenigen angewickelten Windungen soll der gewünschte Bandzug auf das Band aufbringbar sein, der dann möglichst genau geregelt werden soll, um das Band mit exakter vorherbestimmter Geschwindigkeit auf- bzw. abzuwickeln.

Bekannte Bandhaspel sind elektromotorisch, beispielsweise unter Zwischenschaltung von Schaltgetrieben und Übersetzungsgetrieben angetrieben; die Motoren selbst sind in ihrer Drehzahl regelbar. Ein besonderes Problem bekannter Bandhaspelanlagen besteht dann, wenn die Bandanlage oder das Bandwalzwerk mit einem sehr großen Bandzugbereich, beispielsweise gleich oder größer 1 : 20 betrieben wird. Wird in einem realistischen Beispiel bei bestimmten Anwendungsfällen ein Bandzug von 20 Tonnen gefordert, in anderen Anwendungsfallen auf der gleichen Anlage ein Bandzug von nur 200 kp, so ist eine hinreichend genaue Regelung des Bandzuges mit den herkömmlichen Elektromotoren dann nicht möglich, wenn der kleine Haspelzug geregelt werden soll. Der auf beispielsweise 20 Tonnen ausgelegte Antriebsmotor kann in dem "Regelsumpf" des kleinen Zuges nicht mehr definiert eingestellt werden, so daß Störungen der Anlage zu erwarten sind.

Man hat sich in der Vergangenheit damit geholfen, daß durch Schalten verschiedener Übersetzungsstufen im Schaltgetriebe die Leistungsaufnahme des Motors variiert wurde. Doch bei sehr kleinen Bandzügen versagte auch diese Methode; außerdem ist ein Schaltgetriebe aufwendig und teuer.

Ein ähnliches Problem tritt beispielsweise an Meßrollen auf, mit denen die Zugkräfte des die Rolle teilweise umschlingenden Bandes erfaßt werden sollen. Derartige Meßrollen finden beispielsweise zur Messung der Bandebenheit oder des Bandzuges von sie umschlingendem Band an Reversierwalzwerken Verwendung. Bei großem Bandzugbereich und sich ändernden Umschlingungswinkeln reicht die Bandanpreßkraft nicht immer aus, den erforderlichen schlupffreien Antrieb der Rolle zu gewährleisten. Die Rolle muß hierfür mit einem separaten Motor angetrieben werden. Das erforderliche Drehmoment variiert um den Betrag der Bandzüge, der Reibungsänderungen aus z. B. Aquaplaningeffekten, Rollenoberflächenglättung, Walzölauftrag, der Beschleunigungsleistung. Der unterschiedliche Leistungsbedarf für den Rollenantrieb erfordert einen großen Regelbereich, der durch den Motor nicht genau genug ist.

Ausgehend von den dargelegten Problemen liegt der vorliegenden Erfindung die Aufgabe zugrunde, den gattungsgemäßen Drehantrieb so auszulegen, daß auch bei stark unterschiedlichem Leistungsbedarf eine stabile und sehr genaue Regelung der Antriebsmotoren möglich wird.

Zur Lösung der Aufgabe wird erfindungsgemäß ein Antrieb vorgeschlagen, der gekennzeichnet ist durch zwei in Tandemanordnung vorgesehene Elektromotoren, die spiel frei und unabhängig voneinander schaltbar miteinander gekuppelt sind und einzeln oder gemeinsam motorisch und/oder generatorisch antreibbar sind.

Durch zwei in Tandemanordnung betriebene Elektromotoren läßt sich eine definierte Lastaufnahme bei unterschiedlichem Leistungsbedarf einstellen. So ist es beispielsweise möglich, bei sehr großem Bandzug die beiden Motoren gemeinsam motorisch oder generatorisch über ihre gemeinsame gekoppelte Welle zu betreiben. Bei kleinem Bandzug wird nur ein Motor motorisch oder generatorisch betrieben, während der zweite Motor generatorisch oder motorisch vom ersteren Motor angetrieben wird und Leistung des ersten Motors vernichtet. Dadurch kann der motorisch oder generatorisch angetriebene erste Motor in Leistungsbereichen gefahren werden, die auch kleinen Bandzügen angemessen sind, während der generatorisch oder motorisch angetriebene zweite Motor wie eine Bremse wirkt. Gegebenenfalls kann bei Anwendung der Erfindung bei Bandhaspeln aus der generatorischen Betriebsart Energie zurückgewonnen werden. Vergleichbares gilt beim Einsatz der Erfindung an Bandmeßrollen.

Im Rahmen der Erfindung ist es auch denkbar, die beiden Motoren als Zwei-Anker-Motor baueinheitlich miteinander zu verbinden. In einer anderen Ausgestaltung der Erfindung ist vorgesehen, daß die Motoren über Flanschkupplungen miteinander verbunden sind.

Die Erfindung weist eine Reihe von Vorteilen auf. So entfällt durch den wahlweisen Betrieb beider Motoren die Notwendigkeit, beide Motoren mechanisch zu entkoppeln. Zahnkupplungen oder andere Teile, die Getriebelose aufweisen sind nicht erforderlich, so daß die Regelgenauigkeit verbessert wird. Aufwendige und teure Schaltgetriebe werden entbehrlich, Verdrehspiel aus Getrieben treten nicht mehr auf.

Wenn beide Motoren gleich dimensioniert werden - was allerdings keine Voraussetzung für die Erfindung ist -, so kann die Ersatzteilhaltung vereinfacht werden.

Ein Ausführungsbeispiel der Erfindung an einem Haspelantrieb ist in der Zeichnung dargestellt und wird nachfolgend beschrieben. Es zeigt:
- Fig. 1: einen erfindungsgemäßen Haspelantrieb grob vereinfacht und
- Fig. 2: zwei Haspelantriebe nach der Erfindung an einem Umkehrwalzwerk.

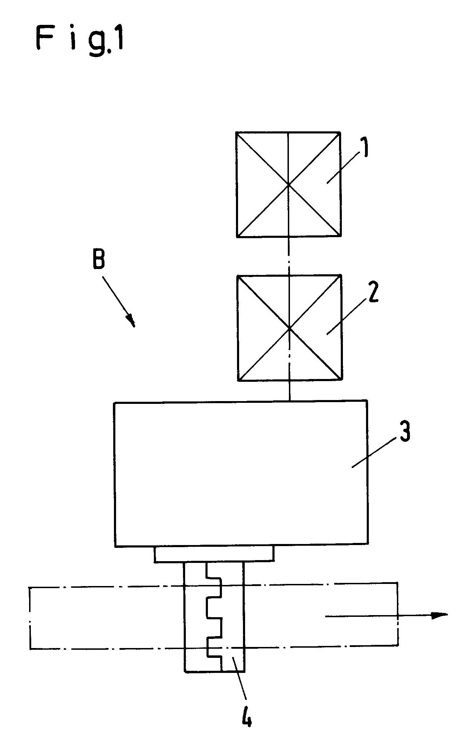

In Figur 1 sind die beiden in Tandemanordnung hintereinander geschalteten Motoren 1 und 2, die über das Verteilergetriebe 3 die Haspelwelle 4 antreiben, erkennbar, die in bekannter Weise spreizbar ausgebildet ist. Der Motor 1 soll für eine Zugkraft von 10 Tonnen und der zweite Motor ebenfalls für 10 Tonnen Zugkraft ausgelegt sein. Beide Motoren 1 und 2 arbeiten über eine gemeinsame Welle, die nicht entkuppelt zu werden braucht. Bei großen Bandzügen arbeitet der Motor 1 mit dem Motor 2 gemeinsam auf das Verteilergetriebe 3, so daß beide Motoren 20 Tonnen Zugkraft aufbringen können, während bei kleinen Haspelzügen nur der Motor 1 angetrieben wird und der Motor 2 als Generator mitgeschleppt wird. Dadurch wird in erfindungsgemäßer Weise die Leistung des Motors 1 erhöht, damit der Motor 1 nicht im untersten, undefinierten Leistungsbereich arbeiten muß.

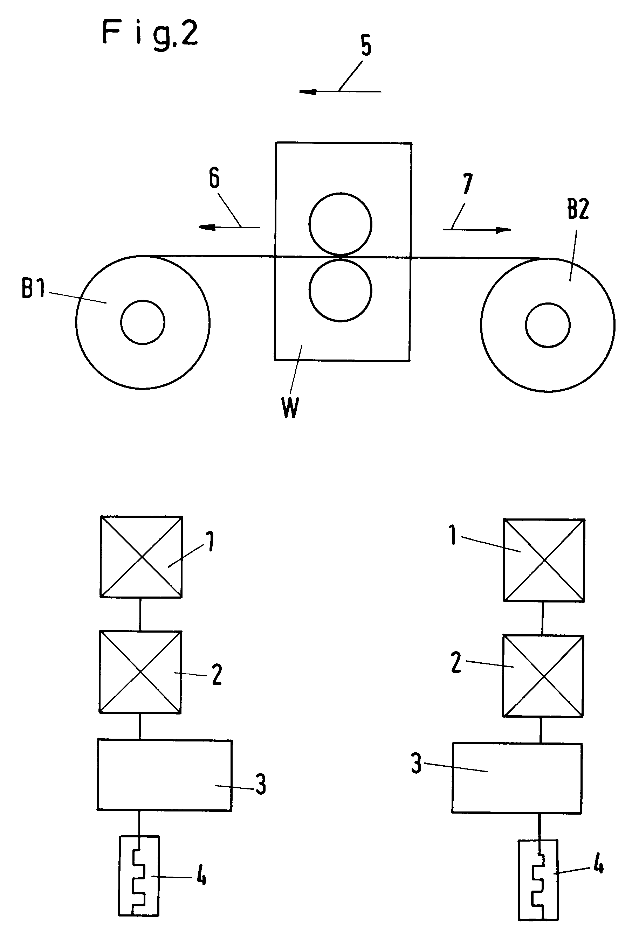

In Figur 2 ist die Anwendung zweier erfindungsgemäßer Haspel an einem Umkehrwalzwerk dargestellt. Beidseitig des Walzgerüstes W sind zwei Bandhaspel B1 und B2 angeordnet, von denen der Bandhaspel B1 in der dargestellten Phase als Aufwickelhaspel und der Bandhaspel B2 als Abwickelhaspel arbeitet. Gemäß der Erfindung sind auch hier die Motoren 1 und 2 in Tandemanordnung hintereinandergeschaltet und können auch generatorisch betrieben werden. Bei der in Pfeilrichtung 5 dargestellten Bandlaufrichtung wird der Bandzug 6 vom Bandhaspel B1 dadurch aufgebracht, daß bei großen Bandzugkräften beide Motoren 1 und 2 des Bandhaspels B1 motorisch angetrieben werden. Den erforderlichen Rückzug 7 bringt der Bandhaspel B2 dadurch auf, daß seine beiden Antriebsmotoren 1 und 2 generatorisch betrieben werden und bremsend wirken.

Bei kleinen Bandzügen ist es auch denkbar, daß die Motoren 1 und 2 des Bandhaspels B1 so geschaltet sind, daß der Motor 1 generatorisch und der Motor 2 motorisch arbeitet. In diesem Fall würde der Motor 1 des Bandhaspels B2 motorisch und der Motor 2 des Bandhaspels B2 generatorisch betrieben. Auf diese Weise sind veschiedene Variationen denkbar, die stets sicherstellen, daß die Motoren 1 und 2 nicht in undefinierten Leistungsbereichen arbeiten.

## Patentansprüche

1. Antriebskonzept für elektromotorische Drehantriebe mit stark schwankendem Leistungsbedarf in Bandanlagen, vorzugsweise an Haspelantrieben und/oder Bandzugmeßrollen,
dadurch gekennzeichnet,
daß der Drehantrieb aus zwei in Tandemanordnung vorgesehene Elektromotoren (1 und 2) besteht, die spielfrei und unabhängig voneinander schaltbar miteinander gekuppelt sind und einzeln oder gemeinsam motorisch und/oder generatorisch antreibbar sind.

2. Antrieb nach Anspruch 1,
dadurch gekennzeichnet,
daß mindestens einer der Motoren (1 oder 2) generatorisch durch den anderen Motor (1 oder 2) antreibbar ist.

3. Antrieb nach Anspruch 1 und 2,
dadurch gekennzeichnet,
daß die beiden Motoren (1 und 2) als Zwei-Anker-Motor baueinheitlich verbunden sind.

4. Antrieb nach Anspruch 1 und 2,
dadurch gekennzeichnet,
daß die Motoren (1 und 2) über Flanschkupplungen miteinander verbunden sind.
